# EUROPEAN PATENT SPECIFICATION

(11) **EP 2 771 517 B1**
(45) Date of publication and mention of the grant of the patent: **19.10.2016**
(21) Application number: 12784050.2
(22) Date of filing: 26.10.2012
(51) Int. Cl.: E02F 3/94, E02F 3/92, E02F 5/10, E02F 5/06

(54) **UNDERWATER TRENCHING APPARATUS**
UNTERWASSERGRABENAUSHEBER
TRANCHEUSE SOUS-MARINE

(30) Priority: 26.10.2011 GB 201118496
(43) Date of publication of application: 03.09.2014
(73) Proprietor: IHC Engineering Business Limited, Riding Mill Northumberland NE44 6EG (GB)
(72) Inventor: MANCHESTER, Jonathan Ralph, Rowlands Gill Tyne and Wear NE39 2JQ (GB)
(74) Representative: Uno, Jennifer Elizabeth Hayes
(86) International application number: PCT/GB2012/052665
(87) International publication number: WO 2013/061073

(56) References cited:
- US-A- 4 295 757
- US-A- 4 342 526
- US-A- 5 651 200
- US-A1- 2002 139 014

## Description

The present invention relates to apparatus or equipment for creating a trench in the bed of a body of water. Such a trench is typically used for burying a cable, pipeline or the like to protect it from damage. The present invention particularly relates to the formation of trenches in hard soils underwater.

### BACKGROUND

Numerous devices are known for forming trenches in the bed of a body of water such as a lake or sea. Often, apparatus such as chain cutters and rockwheels are used to cut the trench. Such trench-cutting apparatus cuts through the soil and rock forming the seabed (hereinafter "soil") and tends to produce an amount of spoil in front of the trench cutting apparatus. The build up of such spoil in front of the trench cutting apparatus can cause a number of problems. For example the build up of spoil can stop or inhibit the forward motion of the trench cutting apparatus. Also, soil can be caused to flow around the trench cutting apparatus to back-fill the trench before the pipe or cable is laid in the trench. Further, the build up of the soil can cause the soil to interfere with the propulsion mechanism (for example articulated vehicle tracks) of the soil cutting apparatus.

The soils of the seabed tend not to be homogeneous and cobbles and other very hard objects are often encountered by the trench cutting apparatus. Such cobbles can interfere with the operation of the trench cutting apparatus, for example by blocking soil removal devices such as dredge pumps or eductors.

Another, problem is that soil adheres to the cutting components of the trench cutting apparatus (such as the picks of a rockwheel) and causes a blockage which may prevent use of the soil cutting apparatus.

The present invention seeks to overcome or alleviate some or all of these problems.

US 5 651 200 describes a dredging device employing a forwardly disposed auger. A grate is arranged behind the auger to prevent passage of debris to a dredging pump. US 4 295 757 shows an underwater trencher according to the preamble of claim 1.

### BRIEF SUMMARY OF THE DISCLOSURE

In accordance with a first aspect of the present invention there is provided an underwater trenching apparatus comprising a soil cutting arrangement having a forwardly disposed cutting portion and a rearwardly disposed non-cutting portion, a soil removal device configured to remove soil from a location forward of the soil cutting arrangement and barrier device located in front of the soil cutting arrangement and configured substantially to prevent passage of soil to the non-cutting portion of the soil cutting arrangement.

In preferred embodiments the barrier device is constructed to prevent passage of solid materials contained in the soil having a maximum dimension greater than a selected threshold dimension.

In some preferred embodiments the soil removal device conveys soil in fluidised form.

Preferably the soil removal device is an eductor or a dredge pump.

In some preferred embodiments the barrier device is configured to prevent or deter entry of solid materials to an inlet of the eductor or dredge pump, where such solid materials have a dimension greater than a selected threshold dimension.

In preferred embodiments the soil cutting arrangement includes a plurality of soil cutting elements arranged for movement about an endless path. Particularly preferred soil cutting arrangements include a rockwheel, chain cutter, shearer or the like.

In other preferred arrangements the soil cutting arrangement is an auger.

Preferably the barrier device is disposed substantially at ground level.

Preferably the soil removal device is arranged above the barrier device.

In embodiments wherein the soil removal device is an eductor preferably the eductor driving jet is directed towards the soil cutting arrangement, thereby to displace soil accumulated on the soil cutting arrangement. Preferably the path of liquid exiting the eductor is configured to be substantially tangential to the direction of rotation of the soil cutting arrangement.

In preferred forms the eductor includes a diffuser portion arranged to slow the fluidised flow velocity of the soil conveyed by the eductor, whereby denser material contained within the soil falls back into the trench.

According to a second aspect of the invention there is provided an underwater trenching machine comprising an underwater trenching apparatus as defined in the first aspect of the invention together with means for propelling the machine in a desired direction for trench forming.

Preferably the underwater trenching machine further comprises control means for controlling the operation of the underwater trenching apparatus and/or components thereof.

### BRIEF DESCRIPTION OF THE DRAWINGS

For a better understanding of the invention and to show how the same may be carried into effect, reference will now be made, by way of example only, to the following drawings in which:
Figure 1 is a front view of an apparatus according to the invention;
Figure 2 is a side view of an apparatus according to the invention;
Figure 3 is a perspective view of the apparatus according to the invention.

### DETAILED DESCRIPTION

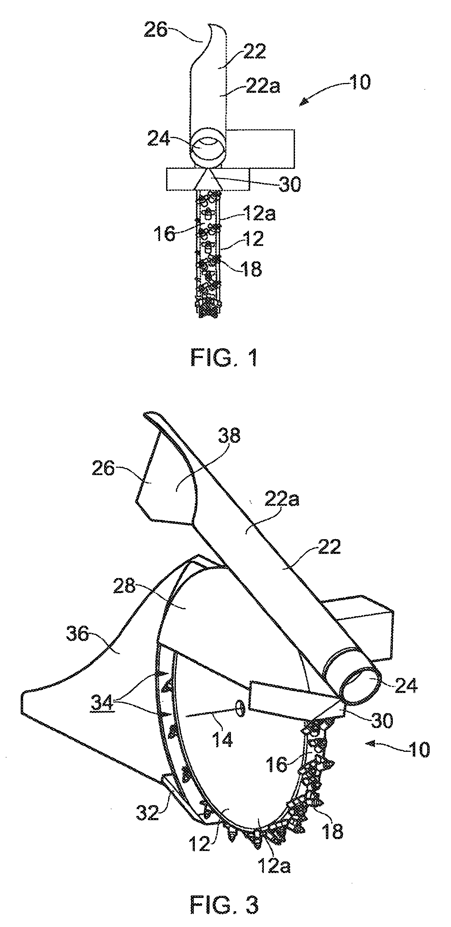

Referring now to the drawings, there is shown an underwater trenching apparatus 10 for forming a trench in the bed of a body of water, for example, the bed of a lake or the seabed. Hereinafter the word "seabed" will be used to refer either to the bed of the lake or the bed of the sea or ocean. The apparatus 10 comprises a soil cutting arrangement 12. Various soil cutting arrangements are known and may be used, preferred examples being chain cutters, rockwheels and shearers. In Figures 1 to 3, a rockwheel 12a is shown. The rockwheel 12a comprises a wheel or disc mounted for rotation about a nominally horizontal axis 14. The rockwheel 12a has an outer circumferential surface 16 to which are mounted a plurality of soil cutting elements 18 which are typically in the form of teeth or picks and are formed from a suitably durable hard material.

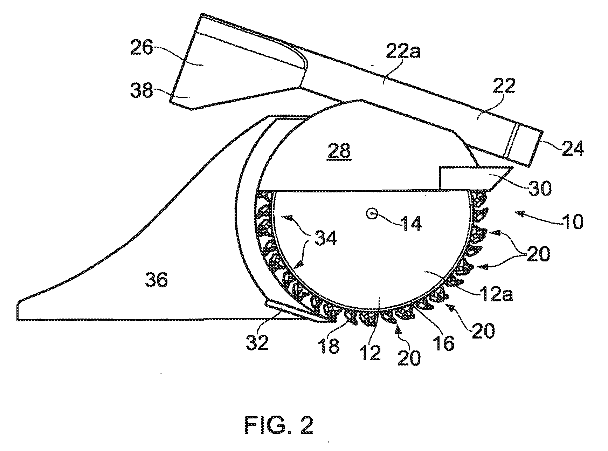

The rockwheel 12a rotates in an anti clockwise (counter-clockwise) direction with respect to the orientation shown in Figure 2. Thus, the soil cutting elements 18 traverse an endless circular path around the perimeter of the rockwheel 12a and in so doing engage the seabed at a forward potion 20. On engagement with the seabed during their rotation, the soil cutting elements 18 cut into the seabed and displace soil thereby to form a trench.

Chain cutters work in a broadly similar manner to the rockwheel. For chain cutters, the soil cutting elements are mounted on an endless belt or chain which is driven so that the soil cutting elements move in an endless loop and contact the soil during a portion of that movement.

In order to prevent or reduce undesired premature back-filling trench to the rear of the trench cutting apparatus, soil removal means 22 are provided. Various types of soil removal means may be suitable for use with the present invention, but preferred means include dredge pumps and, more especially, eductors. An eductor is illustrated schematically in Figures 1 to 3 at 22a.

Eductor 22a includes an inlet 24 and an outlet 26. Thus, the eductor 22a draws soil into the inlet 24 and expels soil via the outlet 26. More specifically, the eductor 22a takes up soil from a location forward of the soil cutting arrangement 12 and expels soil typically rearwardly of the soil cutting arrangement 12. In preferred embodiments the eductor 22a is constructed so that the path of fluidised material through the eductor is made as straight as possible (and most preferably is perfectly straight). This avoids the build up of soil material at bends within the eductor which could cause a blockage.

The soil cutting arrangement 12 is preferably shrouded at least at its portion which is above ground level during cutting operations. Figures 1 to 3 show a shroud or cover 28 which encloses an upper portion of the rockwheel 12a. The provision of a shroud or cover 28 increases the efficiency of removal of soil by the soil removal means 22 (preferably the dredge pump or eductor 22a).

A particular problem addressed by the present invention is the build up of soil in front of the soil cutting arrangement 12. As noted above such build up of soil can hinder or stop the forward motion of the trenching apparatus 10, can cause soil to flow back around the soil cutting apparatus into the trench and can allow soil to fall into the drive mechanism of the vehicle hindering its motion. Accumulated soil on the soil cutting arrangement 12, in particular on the soil cutting elements (teeth) 18 is also a problem which can reduce the efficiency of the trenching operation. Blockages of the soil removal means 22 can also cause difficulties and delays in the trenching operation. In order to address at least some of these problems, the apparatus 10 of the present invention is further provided with a barrier device 30 or guard which is arranged in front of the soil cutting arrangement 12. The barrier device or guard 30 is preferably arranged immediately in front of the soil cutting arrangement 12. In particular, the barrier device 30 is arranged at least approximately at ground level with respect to the normal ground level at either side of the trench being cut. In some preferred arrangements, the barrier device 30 is adjustable so that its height may be set in accordance with the depth of the trench which is being dug.

The barrier device 30 is constructed so that objects having a dimension greater than a pre-selected size (such as stones or "cobbles") cannot pass the barrier. The pre-selected size is conveniently similar to or the same as the inlet or exhaust pipe diameter of a dredge pump or eductor used for removal of the soil. In preferred arrangements the barrier device is arranged substantially at ground level to prevent excessive amounts of soil being accumulated in front of the barrier device 30.

As can be seen from Figures 1 to 3, the soil removal means 22 (typically a dredge pump or eductor 22a) is arranged immediately above the barrier device 30.

The barrier device 30 is most preferably constructed from a robust, durable material which can withstand impacts from hard components of the soil. Typically, the barrier device 30 is made from a substantial metal plate, although other suitably strong materials can be used.

In further preferred embodiments, where the soil removal means 22 is an eductor 22a, the eductor driving jet can be configured so that it is directed at the soil cutting arrangement 12 (for example the rockwheel 12a or a chain cutter). In this way, the soil cutting arrangement 12 is placed in the path of high pressure fluid from the eductor driving jet which is used to displace soil from the soil cutting arrangement 12, in particular to displace soil from around the soil cutting element 18.

A further advantage is achieved if the exit of the eductor 22a is substantially tangential to the direction of rotation of the soil cutting arrangement 12 or of the direction of travel of individual soil cutting elements of the soil cutting arrangement 12. In this way, tangential momentum is in the same direction as the fluidised spoil transport method.

In preferred variations of the invention, the apparatus 10 is provided with a crumber unit 32 which assists in preventing re-circulated soil (i.e. soil which has travelled on the soil cutting arrangement 12, passed through the forward portion 20 thereof and to a rearward portion 34) from passing back into the trench. Thus, the crumber 32 assists in providing a trench with a clean bed or bottom portion into which a pipe, cable or the like can be laid. The crumber unit 32 maybe adjustable in height to accommodate different depths of cut of the soil cutting means 12 (that is, of course, different depths of trench). In some arrangements the crumber unit 32 may have a bend restrictor or share 36 mounted to it, for example to provide increased strength and resistance to deformation.

In further preferred arrangements the exit of the dredge pump or eductor can be arranged such that soil can be directed into the trench to the rear of the apparatus 10, after a pipe or cable or the like has been laid. This assists in burying the pipe, cable or the like in the trench.

In further preferred arrangements a diffuser 38 is provided which acts to slow the velocity of the fluidised soil so that denser material falls preferentially back into the trench. The diffuser 38 can be open bottomed to prevent the build up of debris.

Throughout the description and claims of this specification, the words "comprise" and "contain" and variations of the words, for example "comprising" and "comprises", means "including but not limited to", and is not intended to (and does not) exclude other moieties, additives, components, integers or steps.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds, chemical moieties or groups described in conjunction with a particular aspect, embodiment or example of the invention are to be understood to be applicable to any other aspect, embodiment or example described herein unless incompatible therewith.

## Claims

1. Underwater trenching apparatus (10) comprising a soil cutting arrangement (12), **characterised by** the soil cutting arrangement having a forwardly disposed cutting portion (20) and a rearwardly disposed non-cutting portion (34), a soil removal device (22) configured to remove soil from a location forward of the soil cutting arrangement (12) and barrier device (30) located in front of the soil cutting arrangement (12) and configured substantially to prevent passage of soil to the non-cutting portion (34) of the soil cutting arrangement (12).

2. Underwater trenching apparatus (10) as claimed in claim 1 wherein the barrier device (30) is constructed to prevent passage of solid materials contained in the soil having a maximum dimension greater than a selected threshold dimension.

3. Underwater trenching apparatus (10) as claimed in claim 1 or 2 wherein the soil removal device (22) conveys soil in fluidised form.

4. Underwater trenching apparatus (10) as claimed in claim 3 wherein the soil removal device (22) is an eductor (22a) or a dredge pump.

5. Underwater trenching apparatus (10) as claimed in claim 4 wherein the barrier device (30) is configured to prevent or deter entry of solid materials to an inlet (24) of the eductor (22a) or dredge pump (22), where such solid materials have a dimension greater than a selected threshold dimension.

6. Underwater trenching apparatus (10) as claimed in any preceding claim wherein the soil cutting arrangement (12) includes a plurality of soil cutting elements (18) arranged for movement about an endless path.

7. Underwater trenching apparatus (10) as claimed in claim 6 wherein the soil cutting arrangement (12) is a rockwheel (12a), chain cutter, shearer or the like.

8. Underwater trenching apparatus (10) as claimed in any of claims 1 to 5 wherein the soil cutting arrangement (12) is an auger.

9. Underwater trenching apparatus (10) as claimed in any preceding claim wherein the barrier device (30) is disposed substantially at ground level.

10. Underwater trenching apparatus (10) as claimed in any preceding claim wherein the soil removal device (22) is arranged above the barrier device (30).

11. Underwater trenching apparatus (10) as claimed in claim 4, 5 or 7 or any of claims 6 or 8 to 10 when dependent on claim 4 wherein the soil removal device (22) is an eductor (22a) and the eductor driving jet is directed towards the soil cutting arrangement (12), thereby to displace soil accumulated on the soil cutting arrangement (12).

12. Underwater trenching apparatus (10) as claimed in claim 4, 5, 7 or 11 or any of claims 6 or 8 to 10 when dependent on claim 4 wherein the path of liquid exiting the eductor (22a) is configured to be substantially tangential to the direction of rotation of the soil cutting arrangement (12).

13. Underwater trenching apparatus (10) as claimed in claim 4, 5, 7, 11 or 12 or any of claims 6 or 8 to 10 when dependent on claim 4 wherein the eductor (22a) includes a diffuser portion (38) arranged to slow the fluidised flow velocity of the soil conveyed by the eductor (22a), whereby denser material contained within the soil falls back into the trench.

14. Underwater trenching machine comprising an underwater trenching apparatus (10) as claimed in any preceding claim together with means for propelling the machine in a desired direction for trench forming.

15. Underwater trenching machine as claimed in claim 14 further comprising control means for controlling the operation of the underwater trenching apparatus and/or components thereof.

## Patentansprüche

1. Vorrichtung zur Erzeugung eines Unterwassergrabens (10), umfassend eine Erdaushubanordnung (12), **dadurch gekennzeichnet, dass** die Erdaushubanordnung einen vorne angeordneten aushebenden Abschnitt (20) und einen hinten angeordneten nicht aushebenden Abschnitt (34) aufweist, eine Erdentfernungsvorrichtung (22), die konfiguriert ist, um Erde von einer Stelle vor der Erdaushubanordnung (12) zu entfernen und eine Sperrvorrichtung (30), die sich vor der Erdaushubanordnung (12) befindet und im Wesentlichen konfiguriert ist, um den Durchlass von Erde in den nicht aushebenden Abschnitt (34) der Erdaushubanordnung (12) zu verhindern.

2. Vorrichtung zur Erzeugung eines Unterwassergrabens (10) nach Anspruch 1, wobei die Sperrvorrichtung (30) gebaut ist, um den Durchlass von in der Erde enthaltenen festen Materialien mit einer maximalen Abmessung von mehr als einer ausgewählten Schwellenabmessung zu verhindern.

3. Vorrichtung zur Erzeugung eines Unterwassergrabens (10) nach Anspruch 1 oder 2, wobei die Erdentfernungsvorrichtung (22) Erde in fluidisierter Form befördert.

4. Vorrichtung zur Erzeugung eines Unterwassergrabens (10) nach Anspruch 3, wobei die Erdentfernungsvorrichtung (22) ein Eduktor (22a) oder eine Baggerpumpe ist.

5. Vorrichtung zur Erzeugung eines Unterwassergrabens (10) nach Anspruch 4, wobei die Sperrvorrichtung (30) konfiguriert ist, um den Eintritt von festen Materialien in einen Einlass (24) des Eduktors (22a) oder der Baggerpumpe (22) zu verhindern oder abzuhalten, wenn solche festen Materialien eine Abmessung von mehr als einer ausgewählten Schwellenabmessung aufweisen.

6. Vorrichtung zur Erzeugung eines Unterwassergrabens (10) nach einem vorhergehenden Anspruch, wobei die Erdaushubanordnung (12) eine Vielzahl von Erdaushubelementen (18) beinhaltet, die zur Bewegung um einen Endlosweg angeordnet sind.

7. Vorrichtung zur Erzeugung eines Unterwassergrabens (10) nach Anspruch 6, wobei die Erdaushubanordnung (12) ein Steinrad (12a), ein Kettenschneider, ein Scherer oder ähnliches ist.

8. Vorrichtung zur Erzeugung eines Unterwassergrabens (10) nach einem der Ansprüche 1 bis 5, wobei die Erdaushubanordnung (12) ein Bohrer ist.

9. Vorrichtung zur Erzeugung eines Unterwassergrabens (10) nach einem vorhergehenden Anspruch, wobei die Sperrvorrichtung (30) im Wesentlichen am Boden angeordnet ist.

10. Vorrichtung zur Erzeugung eines Unterwassergrabens (10) nach einem vorhergehenden Anspruch, wobei die Erdentfernungsvorrichtung (22) über der Sperrvorrichtung (30) angeordnet ist.

11. Vorrichtung zur Erzeugung eines Unterwassergrabens (10) nach Anspruch 4, 5 oder 7 oder einem der Ansprüche 6 oder 8 bis 10, wenn von Anspruch 4 abhängig, wobei die Erdentfernungsvorrichtung (22) ein Eduktor(22a) ist und der Eduktorantriebsstrahl in Richtung der Erdaushubanordnung (12) gerichtet ist, um dadurch auf der Erdaushubanordnung (12) angesammelte Erde zu verdrängen.

12. Vorrichtung zur Erzeugung eines Unterwassergrabens (10) nach Anspruch 4, 5, 7 oder 11 oder einem der Ansprüche 6 oder 8 bis 10, wenn von Anspruch 4 abhängig, wobei der Weg der Flüssigkeit, die aus dem Eduktor (22a) austritt, so konfiguriert ist, dass er im Wesentlichen tangential zur Drehrichtung der Erdaushubanordnung (12) ist.

13. Vorrichtung zur Erzeugung eines Unterwassergrabens (10) nach Anspruch 4, 5, 7, 11 oder 12 oder einem der Ansprüche 6 oder 8 bis 10, wenn von Anspruch 4 abhängig, wobei der Eduktor (22a) einen Diffusorabschnitt (38) beinhaltet, der angeordnet ist, um die Flussgeschwindigkeit der vom Eduktor (22a) beförderten fluidisierten Erde zu verlangsamen, wobei dichteres Material, das in der Erde enthalten ist, zurück in den Graben fällt.

14. Maschine zur Erzeugung eines Unterwassergrabens, umfassend eine Vorrichtung zur Erzeugung eines Unterwassergrabens (10) nach einem vorhergehenden Anspruch zusammen mit Mitteln zum Antreiben der Maschine in eine gewünschte Richtung zur Grabenbildung.

15. Maschine zur Erzeugung eines Unterwassergrabens nach Anspruch 14, weiter umfassend Steuerungsmittel zur Steuerung des Betriebs der Vorrichtung zur Erzeugung eines Unterwassergrabens und/oder von Komponenten davon.

## Revendications

1. Appareil de creusement sous-marin (10) comprenant un dispositif de coupe de terrain (12), **caractérisé par** le dispositif de coupe de terrain possédant une partie de coupe disposée vers l'avant (20) et une partie non-coupante disposée vers l'arrière (34), un système de retrait de terrain (22) configuré pour retirer du terrain depuis un emplacement à l'avant du dispositif de coupe de terrain (12) et un dispositif de blocage (30) situé en face du dispositif de coupe de terrain (12) et configuré sensiblement pour empêcher le passage du terrain vers la partie non-coupante (34) du dispositif de coupe de terrain (12).

2. Appareil de creusement sous-marin (10) selon la revendication 1, dans lequel le dispositif de blocage (30) est conçu pour empêcher le passage de matériaux solides contenus dans le terrain ayant une dimension maximum supérieure à un seuil de dimension sélectionné.

3. Appareil de creusement sous-marin (10) selon la revendication 1 ou 2, dans lequel le système de retrait de terrain (22) convoie le terrain sous forme fluidifiée.

4. Appareil de creusement sous-marin (10) selon la revendication 3, dans lequel le système de retrait de terrain (22) est un éjecteur (22a) ou une pompe de dragage.

5. Appareil de creusement sous-marin (10) selon la revendication 4, dans lequel le dispositif de blocage (30) est configuré pour empêcher ou prévenir l'entrée de matériaux solides dans une admission (24) de l'éjecteur (22a) ou la pompe de dragage (22), lorsque de tels matériaux solides ont une dimension maximum supérieure à un seuil de dimension sélectionné.

6. Appareil de creusement sous-marin (10) selon l'une quelconque des revendications précédentes, dans lequel le dispositif de coupe de terrain (12) inclut une pluralité d'éléments de coupe de terrain (18) disposés pour se déplacer autour d'une trajectoire sans fil.

7. Appareil de creusement sous-marin (10) selon la revendication 6, dans lequel le dispositif de coupe de terrain (12) est une roue de coupe (12a), une mortaiseuse à chaîne, une haveuse ou similaire.

8. Appareil de creusement sous-marin (10) selon l'une quelconque des revendications 1 à 5, dans lequel le dispositif de coupe de terrain (12) est une tarière.

9. Appareil de creusement sous-marin (10) selon l'une quelconque des revendications précédentes, dans lequel le dispositif de blocage (30) est disposé sensiblement au niveau du sol.

10. Appareil de creusement sous-marin (10) selon l'une quelconque des revendications précédentes, dans lequel le système de retrait de terrain (22) est disposé au-dessus du dispositif de blocage (30).

11. Appareil de creusement sous-marin (10) selon la revendication 4, 5 ou 7 ou l'une quelconque des revendications 6 ou 8 à 10 lorsqu'elles dépendent de la revendication 4, dans lequel le système de retrait de terrain (22) est un éjecteur (22a) et le jet moteur de l'éjecteur est dirigé en direction du dispositif de coupe de terrain (12), afin de déplacer de la sorte le terrain accumulé sur le dispositif de coupe de terrain (12).

12. Appareil de creusement sous-marin (10) selon la revendication 4, 5, 7 ou 11 ou l'une quelconque des revendications 6 ou 8 à 10 lorsqu'elles dépendent de la revendication 4, dans lequel la trajectoire du liquide sortant de l'éjecteur (22a) est configurée pour être sensiblement tangentielle au sens de rotation du dispositif de coupe de terrain (12).

13. Appareil de creusement sous-marin (10) selon la revendication 4, 5, 7, 11 ou 12 ou l'une quelconque des revendications 6 ou 8 à 10 lorsqu'elles dépendent de la revendication 4, dans lequel l'éjecteur (22a) inclut une partie de diffuseur (38) disposée pour ralentir la vitesse du flux fluidifié du terrain convoyé par l'éjecteur (22a), moyennant quoi le matériau plus dense contenu dans le terrain retombe dans la tranchée.

14. Machine de creusement sous-marin comprenant un appareil de creusement sous-marin (10) selon l'une quelconque des revendications précédentes associé à un moyen pour faire avancer la machine dans une direction souhaitée pour la formation de la tranchée.

15. Machine de creusement sous-marin selon la revendication 14, comprenant en outre un moyen de commande pour commander le fonctionnement de l'appareil de creusement sous-marin et/ou les composants de celui-ci.
